# EUROPEAN PATENT SPECIFICATION

(11) **EP 2 424 638 B1**
(45) Date of publication and mention of the grant of the patent: **04.10.2017**
(21) Application number: 10718722.1
(22) Date of filing: 27.04.2010
(51) Int. Cl.: B01D 19/00, B01D 53/18, B01D 47/18, B01D 3/34

(54) **METHOD TO TRANSFER A VOLATILE SUBSTANCE**
VERFAHREN ZUM TRANSFER EINER FLÜCHTIGEN SUBSTANZ
PROCÉDÉ DE TRANSPORT D'UNE SUBSTANCE VOLATILE

(30) Priority: 28.04.2009 NL 2002814
(43) Date of publication of application: 07.03.2012
(73) Proprietor: Stichting Wageningen Research, 6708 PB Wageningen (NL)
(72) Inventor: STARMANS, Dick Antonius Johannes, NL-6721 DJ Bennekom (NL); TIMMERMAN, Maikel, NL-3833 BJ Leusden (NL)
(74) Representative: V.O.
(86) International application number: PCT/NL2010/050235
(87) International publication number: WO 2010/126361

(56) References cited:
- EP-A- 0 020 055
- EP-A- 0 630 678
- EP-A- 0 908 216
- EP-A- 1 905 816
- GB-A- 1 210 422
- US-A- 862 646
- US-A- 3 350 877
- US-A- 3 353 337
- US-B2- 6 497 111

## Description

### FIELD OF THE INVENTION

The invention relates to a method and system to transfer a volatile substance between two fluid phases.

### BACKGROUND

WO 9817362 describes a method of transporting a gas to or from a solution of the gas in a liquid through a substantially liquid impermeable and gas permeable polymer membrane. Particularly, the known method includes transferring a gaseous component between two fluids having different partial pressures of the gaseous component, wherein at least one of the two fluids is a liquid, the method comprising: contacting one of the two fluids with a first side of a two-sided, membrane unit, the membrane unit including a membrane being substantially impermeable to the liquid. The known method involves a simultaneously contacting of the second side of the two-sided, membrane unit with the other of the two fluids.

An embodiment of the known system includes a generally cylindrical permeator module equipped with a plurality of membrane units disposed within a shell side cavity defined by the inside surface of wall of the module, inlet tube sheet second fluid inlet and outlet ports. Membrane units are grouped in bundles comprising multiple units and a permeator module can include a plurality of bundles. In use, a first fluid, for example a gas mixture including a permeating gaseous component, is caused to flow through the tube side. A source of the gas mixture is connected to first fluid inlet port and the gas mixture is permitted to enter an inlet plenum, pass through the interior of hollow fibers, discharge to outlet plenum and exhaust through first fluid outlet port to a collection reservoir. A second fluid is introduced through second fluid inlet port and pumped through the shell side cavity around the membrane units and through baffle openings to ultimately reach second fluid outlet port for collection. Outside surfaces of the hollow fibers are coated with amorphous copolymer. The permeating gaseous component migrates through the coating of the amorphous copolymer between first and second fluids.

A disadvantage of the known method is that it requires application of relatively expensive, sensitive filter components, that need to be fixed into the exchange chamber potting walls without leaking. Also, the application of the membrane units only allows for relatively low flow rates of fluid therethrough as the hollow fibers are not mechanically stable enough to withstand large pressure differences. Besides, the known system can only achieve relatively low transfer rates of the substance (from one fluid to the other). As a result, the known method is not particularly well suited to be used in transferring a volatile substance from one liquid to another liquid, in the case that a high level of purification of the first liquid is required, in an efficient and swift manner.

EP1905816-A1 discloses an apparatus for the transfer of organic compounds, comprising a packed stripping column. During operation, a liquid phase is distributed onto the packed stripping column, causing the liquid to trickle down the column counter-currently to a flow of a gas stream that is to receive the organic compound. A disadvantage of this apparatus is that the packing bed can easily become clogged. Also, the apparatus is complex, relatively expensive, and has relatively high maintenance costs due to the components used.

### SUMMARY

The present invention aims to provide an improved method for the transfer of a substance between two fluid phases, for example to purify or recover the substance. To this aim, and according to an aspect of the invention, a method is characterized by the features of claim 1.

Preferably, a method to transfer a volatile substance from a first liquid to a second liquid, comprises: increasing a liquid-to-gas surface area of the first liquid and/or increasing a gas-to-liquid surface area of the second liquid (using the above-mentioned liquid conveyors for the respective liquids, and a respective gas phase), to enhance mass transport of the volatile substance from the first liquid to the second liquid. Preferably, the method involves increasing each of the liquid-to-gas surface areas of both the first second liquid, leading to an enhanced mass transport.

The present method can provide an efficient transfer of the substance, for example without application of liquid impermeable membrane unit (separating the liquids). Also, the present method can achieve relatively high transfer rates of the substance, for example to provide a high level of purification of the first liquid. The present invention can be carried out on large scale, using relatively durable, robust, cheap, and uncomplicated technology, having relatively low downtimes and low maintenance costs.

Prior art that does not relate to transferring a volatile substance between liquids includes US3,353,337 relating to a dust collector, configured to remove dust or other solid particles from a gas, particular to purify air in a building. A similar device is disclosed by EP0908216-A2.

GB1210422 relates to a "on-stream" gas stripping device which is similar in principle to one form of heart-lung machine. During operating, the action of a rotating rotor disposes a film of liquid on a rotor chamber. GB'422 describes an example of monitoring the ammonia concentration in river water, wherein air and carbon dioxide is removed from the water in a first stripping chamber, and nitrogen (resulting from oxidizing ammonia) in a second chamber.

US3350877 discloses a combination silencer and filter device, and more particularly to a filter muffler for use on exhaust pipes of motor vehicles. US6497111B2 discloses a system for desalination of seawater by means of two rotating drums within an airtight space. The vapour transferred is water. This document does not disclose the second liquid to have a higher affinity than the first liquid. The present method particularly does not require mechanical vapour recompression to concentrate volatile substances (for example from vapour streams). Therefore, the present method can be carried out without requiring a lot of mechanical and/or thermal energy. The present invention can provide a relatively low-tech, cheap solution for purification (and concentration) regarding one or more volatile substances, preferably including transferring the substance(s) in an efficient manner from one liquid stream to another liquid stream. For example, the invention can be used for recovery of one or more volatile substances, for example from waste water, sewage slurry, or manure.

Besides, embodiments of the present invention can provide a relatively pure, concentrated solution containing the volatile substance(s). The invention allows for two separated liquids to share a common gas-phase. For example, the first liquid may contain one or more volatile substances that should be removed, while the second liquid has an enhanced affinity for said volatile substance(s). Preferably, the method includes evaporation of the volatile substances from a liquid to gas surface of the first liquid, into a gas phase, the gas phase being in contact with a gas-to-liquid surface of the second liquid. This allows an efficient uptake of the evaporated substance(s) into the second liquid. The substance to be transferred from the first to the second liquid is a volatile gaseous substance, for example a pure substance or a mixture. It can be any of a broad range of chemical species. Particularly, the volatile substance can be a gas or gas mixture that is dissolved in the first liquid.

The substance can include elemental gases such as helium, hydrogen, neon, nitrogen, chlorine, argon, oxygen, krypton and xenon; hydrocarbons such as methane, ethylene, ethane, acetylene, propane, propylene, cyclopropane, butane and butylene; halocarbons or halohydrocarbons such as dichlorodifluoromethane, methylene chloride, and methyl chloride; and miscellaneous industrial and environmental gases such as nitrous oxide, carbon dioxide, ozone, hydrogen sulfide, ammonia, sulfur dioxide, carbon monoxide, phosgene and any mixture of any of them. Oxygen is a preferred non-mixture gaseous component. Oxygen/nitrogen is a preferred mixture gaseous component.

In a further embodiment, a gas mixture substance can include at least one component that can achieve or induce a certain further effect on the transfer, such as a component that leads to enhanced mass transfer with respect to a substance that does not include the component. Also, at least one of the components of the mixture can be selected to enhance safety of the process, for example to reduce risk of explosion, fire and/or release of toxic substance(s).

Besides, the first liquid can be a single substance or a mixture. A wide variety of liquids such as aqueous and nonaqueous solvents can be used. The first liquid can include water, alcohols, ethers, ketones, esters, and combinations of these.

Similarly, the second liquid can be a single substance or a mixture. A wide variety of second liquids such as aqueous and nonaqueous solvents can be used. The second liquid can include water, alcohols, ethers, ketones, esters, and combinations of these.

Representative alcohols include ethanol, butanol, and ethylene glycol. Representative ethers include dimethylether, diethylether and anisole. Representative ketones include acetone, ethylmethylketone and diethylketone. Representative esters include methylacetate, methylpropionate and ethyl acetate. Representative combinations include cellosolve; ethylcellosolve; acetylcarbinol; cellosolve acetate; polyethylene ether glycol, methoxyacetone; methylmethoxy acetate and methylketo butyrate.

In a further embodiment, the first liquid and/or second liquid can include at least one component that can achieve or induce a certain further effect on the transfer, such as a component that leads to enhanced mass transfer with respect to that liquid without the component. Also, at least one of the components of the first and/or second liquid can be selected to enhance safety of the process, for example to reduce risk of explosion, fire and/or release of toxic substance(s).

Also in the present invention, water is a preferred first liquid. For example, the water as such (i.e. besides containing the substance that is to be transferred) can be any grade ranging from reagent quality, demineralized water to process quality water, such as brackish water, salt water, and waste water, sewage slurry, or manure .

Also, in the present invention, the liquid can be considered to act as a solvent for the gaseous component (i.e., the substance is dissolved in the first liquid).

A non-limiting, preferred embodiment of the invention involves removal of ammonia from the first liquid. In a further embodiment, such removed (i.e. recovered) ammonia is used for producing (artificial) fertilizer.

According to a preferred embodiment, the liquid-to-gas surface area of the first liquid and/or the gas-to-liquid surface area of the second liquid is enlarged by creating a thin film of the respective liquid. For example, the first liquid can be passed over a substantially vertical plate, particularly to increase said surface area. Similarly and for the same purpose, the second liquid can be passed over a substantially vertical plate.

According to a non-limiting, preferred embodiment, at least one liquid film is generated using at least one rotating disk that is partly submerged in a respective liquid. For example, the rotating disk can be covered with a carrier material designed to be wetted by the liquid, for example a porous carrier material, a suitable textile, or a different carrier material.

According to an embodiment, at least one of the liquids is thermally conditioned, for example heated or cooled.

According to an embodiment, the second liquid is a derivate of the volatile substance.

According to an embodiment, the second liquid is a base_{.} According to an embodiment, the second liquid is an acid_{.}

An aspect of the invention provides the use of a system as defined by the features of claim 7.

According to an embodiment, the system includes pumping means for pumping liquid to and from at least one of the reservoirs, for example each of the reservoirs, during operation of the liquid conveyors.

According to an embodiment, the system includes a temperature conditioning system, for example a heating and/or cooling system, configured for thermally conditioning at least one of the liquids.

According to an embodiment, the first and second liquid conveyer have the same configuration.

For example, the system can be a system for transferring a volatile substance from a first liquid to a second liquid, wherein the system includes at least one first reservoir for receiving first liquid, at least one second liquid reservoir for receiving second liquid, and at least one transfer space for holding a gaseous transfer medium, for contacting a liquid-to-gas surface area of first liquid held in the first reservoir, and contacting a gas-to-liquid surface area of second liquid held in the second reservoir, during operation.

This system can also lead to the above-mentioned advantages. Particularly, the system can be made relatively durable, robust, and reliable, and can achieve mass transfer of the volatile substance in an efficient manner, preferably utilizing relatively little energy. Besides, the system can be configured to operate on a relatively large scale, processing large volume flows.

Moreover, an aspect of the invention provides a system for transferring a volatile substance from a first liquid to a second liquid, wherein the system includes at least a first and a second liquid conveyor for conveying a first liquid and a second liquid along opposite sides of an intermediate space, respectively, to transfer the volatile substance via that space. Preferably, such a system is provided with the above-described first reservoir(s), second reservoir(s) and at least a respective (airtight) transfer space for holding a gaseous transfer medium.

Further embodiments of a system according to the invention may include adjacent reservoirs for the liquids, preferably a sequence of pairs of adjacent reservoirs. For example, reservoirs for the first liquid connected in series. Also, the reservoirs for the second liquid are preferably connected in series. The system includes at least a first liquid conveyor for conveying the first liquid along a gaseous phase, particularly to transfer the volatile substance via that space. Each first conveyor can be configured to carry a film of first liquid, and to move the film along the gaseous phase. Part of each first liquid conveyor preferably reaches into a first reservoir for receiving the first liquid, i.e., to be wetted by the liquid. Also, optionally, each first liquid conveyor can have a rotating liquid conveying part, for example having a liquid sorbent surface. The system includes at least a second liquid conveyor for conveying the second liquid along a gaseous phase; wherein the first and second liquid conveyer may have the same configuration.

Besides, the invention provides a method according to claim 1 of using of the system, to remove at least e.g. one volatile substance from at least one of: water, slurry, waste water, or manure.

The invention will now be further elucidated by means of non-limiting examples, referring to the drawing.

### BRIEF DESCRIPTION OF THE DRAWINGS

Figure 1 schematically depicts an opened plan view of a first embodiment of the invention;
Figure 2 depicts a cross-section over line II-II of Fig. 1;
Figure 3A depicts a cross-section over line III-III of Fig. 1;
Figure 3B is similar to Fig. 3A, showing an alternative example;
Figure 4 is a perspective view of part of the first embodiment;
Figure 5A is a longitudinal cross-section of a second embodiment of the invention;
Figure 5B schematically shows a cross-section over line V-V of Fig. 5A; and
Figure 6 is a similar view as Fig. 1 of a further elaboration of a system and method according to the invention.

### DETAILED DESCRIPTION

Similar or corresponding features are denoted by similar or corresponding reference signs in the present patent application.

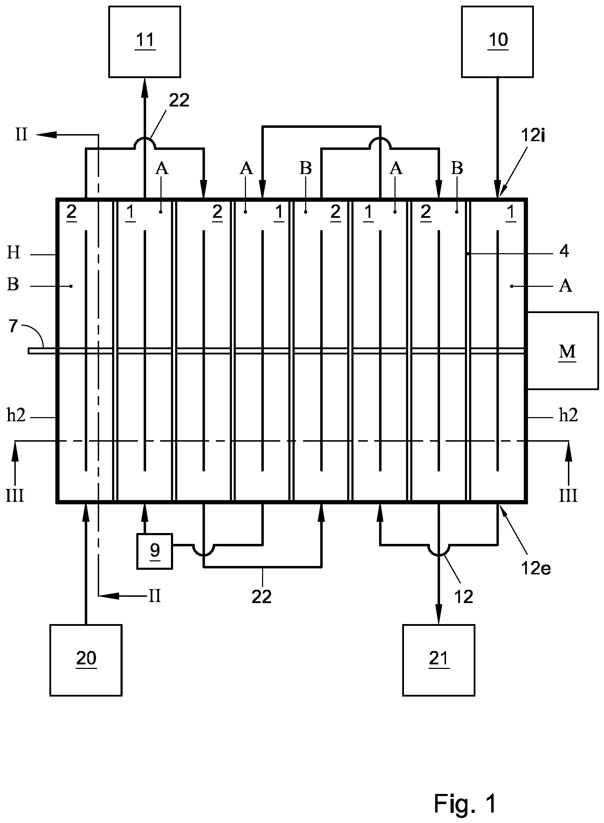

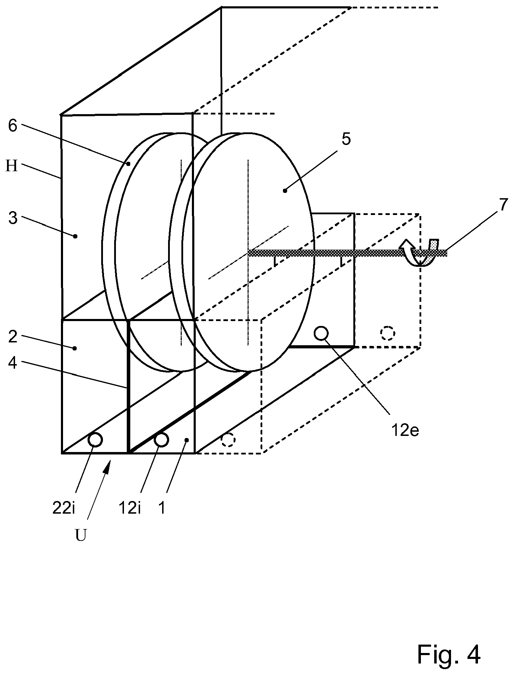

Figures 1-4 show a first non-limiting example of a system for transferring a volatile substance from a first liquid A to a second liquid B. Particularly, the system is designed to achieve transfer of the substance via the gas phase.

Examples of the substance, the first liquid A and second liquid B are mentioned above. Preferably, the first liquid A may contain one or more volatile substances that should be removed, while the second liquid B has an enhanced affinity for said volatile substance(s). The first and second liquid preferably have different partial pressures of the gaseous component; particularly, the first liquid A has a partial pressure of the volatile substance (i.e. in it's gas phase) that is higher than the partial pressure of the substance concerning the second liquid B. In an alternative embodiment, there is provided a chemical reaction of the transferred volatile substance inside liquid B, such that the reaction causes a non-equilibrium finite storage opportunity for the volatile substance.

In the present example, the system includes a number of processing units U (in the example four such units U1, U2, U3, U4). In this embodiment, each unit U is provided with a first reservoir 1 for receiving first liquid A, and a second reservoir 2 for receiving second liquid B. Preferably, the reservoirs 1, 2 of each unit are adjacent to each other, for example extending in parallel with one another. More particularly, the example includes a sequence of units U1-U4, providing an array of first and second reservoirs 1, 2.

The units U can be arranged either in such way that the reservoirs 1 and 2 alternate (121212...), or that they match pair wise with a single unit at either end of the setup (12211221...).

Particularly (as in this first example), but not necessarily, to provide a relatively compact system, first reservoirs 1 and second reservoirs 2 are arranged in a sequence, for example one after the other. For example, a second reservoir 2 may extend between each pair of nearest first reservoirs 1 (vice versa a first reservoir 1 extends between each pair of nearest second reservoirs 2), as in Fig. 1.

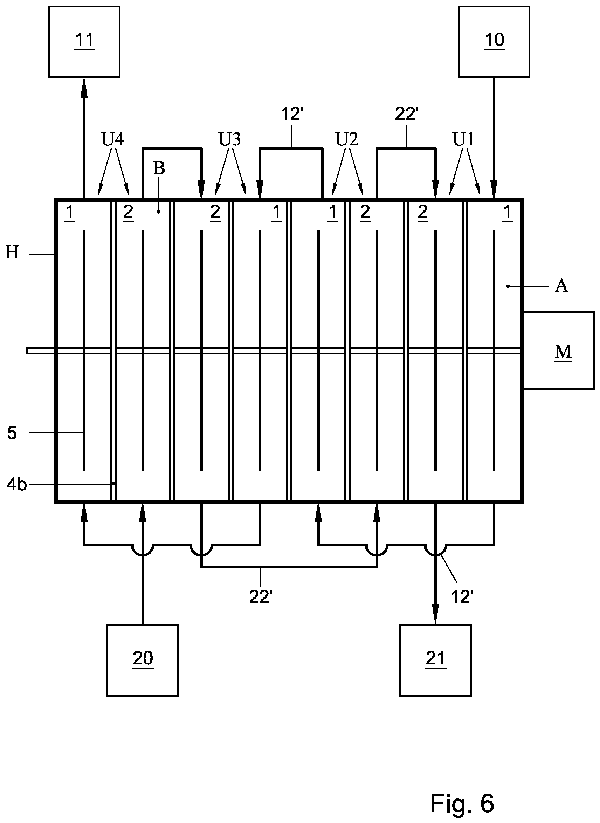

Figure 6 depicts another preferred arrangement, wherein the units U are arranged such that at least the two first reservoirs 1 of two different units U3, U4 are located adjacent each other (without any second reservoir being located there-between). In this example, the two second reservoirs 2 of the units U1, U2 are located adjacent each other, as well (without any first reservoir being located there-between). The same holds for the two second reservoirs 2 of the units U3, U4. For example, in case of a sequence of a large number of separate processing units U (each unit having a first and second reservoir 1, 2, and preferably having a single transfer space 3), the units U are preferably arranged to provide two outer reservoirs (first reservoirs 1, in Fig. 6, particularly a most upstream and most downstream reservoir 1 for receiving and discharging one of the liquid streams, upstream/downstream relating to the flow direction of the respective liquid stream). The outer reservoirs enclose a sequence of inner reservoirs, the inner reservoirs being grouped in pairs of first reservoirs 1 and pairs of second reservoirs 2. Each pair of inner reservoirs (1, 1 or 2, 2) has two adjacent reservoirs, of different units U.

In other words, in the embodiment of Fig 6, subsequent processing units U are preferably arranged in subsequent pairs of units U, each pair of units U having the two second reservoirs 2 (or alternatively, having the first reservoirs 1) located next to each other.

In this way, thermal losses between the reservoirs 1, 2 can be significantly decreased, particularly in the case that the first and second liquid A, B have different operating temperatures.

The present example includes a housing H having several compartments. Particularly, the housing H contains the first and second reservoirs 1, 2. The housing H includes separation walls 4, separating the first and second reservoirs 1, 2. As follows from the drawings, the present housing H includes a bottom wall h1, side walls h2, and a top wall h3. The housing H (i.e. housing walls h1, h2, h3) is preferably configured to provide an airtight enclosure (chamber), defining bottom, side and top walls of the processing units U. According to a further embodiment, the housing H is made of plastic. Also, in another embodiment, the housing is made of at least one metal or alloy, for example stainless steel. The housing H can have various shapes. In a preferred embodiment, the housing has a curved top wall, particularly having a semi-circular cross-section, a concave side being faced downwardly. Also, preferably, the housing H can be opened for gaining access to the interior of the housing. For example, one or more walls or wall parts of the housing (for example a top wall h3, or part thereof) can be displaceable or removable, for gaining such access.

Also, each processing unit U has a transfer space 3 (a gas phase, also called "volatile substance transfer space") for holding a gaseous volatile substance transfer medium, overhead of the reservoirs 1, 2. Each transfer space 3 can be single, undivided volume (i.e. a single gas phase). In a preferred example, as in the present embodiment, the transfer medium that is present in the transfer space 3 is air. Alternatively, the transfer space 3 can be filled with another gaseous transfer medium, for example an inert gas. In the present embodiment, the housing H is configured to provide an airtight transfer space 3 above the reservoirs 1, 2. As clearly follows from the drawing, said airtight transfer space 3 is hermetically (i.e. airtightly) sealed from an environment of the system. Thus, during operation, the system prevents transfer of outside air into each transfer space 3, and prevents a gaseous content (including any volatile substance that has been evaporated therein) of the each transfer space 3 to flow/escape to the outside environment.

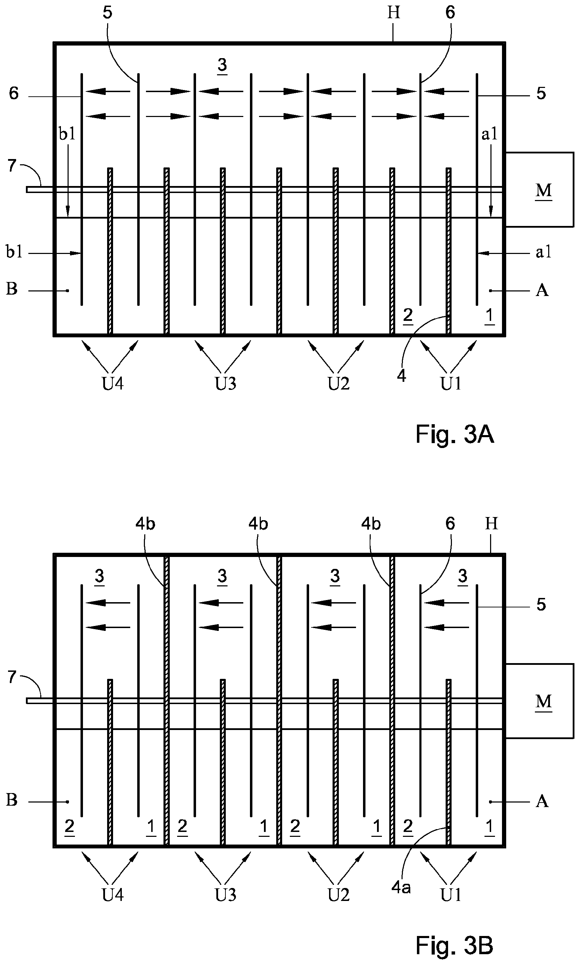

The example shown in Fig. 3A is provided with a single transfer space 3, extending above all of the first and second reservoirs 1, 2 of the processing units U1-U4. In this case, all separation walls 4, separating the first and second reservoirs 1, 2 have an upper edge that is spaced-apart from the top wall h3 of the housing H, allowing transfer of the substance there-between.

A more preferred example is shown in Fig. 3B, and is provided with a plurality of separate transfer spaces 3 (i.e. a sequence of transfer spaces 3), each space 3 extending above a single first and second reservoir 1, 2 of a respective one of the processing units U1-U4. Thus, each processing unit U1-U4 has its own dedicated (airtight) transfer space 3. In this case, first partition walls 4a are provided between the reservoirs 1, 2 of each processing unit U, the walls 4a having upper edges spaced-apart from the top wall h3 of the housing H, allowing transfer of the substance there-between (the upper edges are located above liquid levels in both reservoirs 1, 2 during operation). Second partition walls 4b extend from the bottom h1 to the top h3, separating the reservoirs as well as the transfer spaces of adjacent units U. In this way, a more efficient system is provided, utilizing a counter current flow of the first and second liquid in an optimal manner, enhancing transfer via the separate transfer spaces 3.

As an alternative to the example shown in Fig. 3B, at least one of the processing units can be provided with separate airtight transfer spaces (one overhead of each respective reservoir 1, 2 of that unit), the separate airtight transfer spaces holding the transfer medium. In such an alternative embodiment, an afore-mentioned separation wall (4a) between the reservoirs 1, 2 can extend all the way to the top wall h3. In that case, the separate transfer spaces of the unit can be connected to each other by a suitable fluid communication, for example a duct system, to allow circulation of transfer medium between its transfer spaces. For example, such a fluid communication can include a transfer medium pump, for example having an impeller, to enhance circulation of the transfer medium.

During operation, air (or another transfer medium) that is held in a transfer space 3 contacts a liquid-to-gas surface area a1 of first liquid A held in a first reservoir 1, and contacts a gas-to-liquid surface area b1 of second liquid B held in a respective second reservoir 2.

Preferably, the reservoirs 1 for the first liquid A are connected in series, for example by a duct system 12, 12' (see Fig. 1, 6), connecting reservoir output ports 12e to downstream reservoir input ports 12i. Similarly, the reservoirs 2 for the second liquid B are connected in series, for example by a duct system 22, 22' that connects respective reservoir output ports 22e to downstream reservoir input ports 22i. Preferably, the arrangement of first reservoirs 1 and second reservoirs 2 (for example the configuration of the interconnecting duct systems 12, 12', 22, 22') allows a counter current flow of the first and second liquid.

As follows from Fig. 1 the first liquid A (containing one or more substances that are to be removed there-from) can be provided by a respective first liquid source system 10, which can be coupled to an input port 12i of the most upstream first reservoir 1 of the series of first reservoirs upstream relating to the flow direction of the first liquid A). Similarly, a first liquid drain system 11 can be coupled to an exit port 12e of the most downstream first reservoir 1 of the series of first reservoirs, to receive purified first liquid (downstream relating to the flow direction of first liquid A) .

As follows from Fig. 1 the second liquid (which is to receive either one or more substances) can be delivered by a respective second liquid source system 20, which can be coupled to an input port 22i of the most upstream second reservoir 2 (upstream relating to the flow direction of second liquid B) of the series of second reservoirs. Similarly, a second liquid drain system 21 can be coupled to an exit port 22e of the most downstream second reservoir 2 of the series of second reservoirs (downstream relating to the flow direction of second liquid B), to receive second liquid that contains the substance(s) that has/have been transferred thereto from the first liquid.

Preferably, liquid temperature control means are provided, to control or adjust a temperature of the first liquid, the second liquid, or both. More particularly, to this aim, one or more liquid temperature conditioners (for example one or more liquid heating units) can be connected to the housing H, to a duct system 12, 22 and/or be part of afore-mentioned source and drain systems 10, 11, 20, 21. In a further embodiment, at least one first reservoir 1 includes a liquid temperature conditioner, to thermally condition a temperature of first liquid contained in that reservoir 1. In the same way, at least one second reservoir 2 can be provided with a liquid temperature conditioner, to thermally condition a temperature of second liquid contained in that reservoir 2. In the present example, a temperature conditioning unit 9 is provided to condition (particularly increase) the temperature of first liquid that flows to the last (most downstream, regarding flow of first liquid A) first reservoir 1 (see Fig. 1).

Also, the system can include pumping means for pumping liquid to and from each of the reservoirs 1, 2. More particularly, to this aim, one or more pumps can be provided, for example connected to the housing H, being part of a duct system 12, 22 and/or of afore-mentioned source and drain systems 10, 11, 20, 21.

According to an embodiment, the system can be configured to feed one or more first films (i.e. "source films") of first liquid A and one or more second films of second liquid B (i.e. "destination films") to (or along/through) the exchange space 3, to transfer the volatile substance(s) via that space 3, particularly a transfer using evaporation from the first film(s) and sorption into the second film(s). For example, the first and second films can be held in parallel to each other.

Each of the one or more films (of first and/or second liquid) provide increased liquid surface areas that can contact the transfer space 3, to exchange volatile substance therewith (via evaporation from the first film, and sorption into the second film).

Generation of the liquid films can be achieved in various ways. For example, the system can be configured to generate one or more films of first liquid A, by passing the first liquid A over one or more substantially vertical plates. Also, the system can be configured to generate one or more films of second liquid B, for example by passing the second liquid B over one or more substantially vertical plates. The afore-mentioned substantially vertical plates can be stationary plates, or moving plates, for example rotating plates 5, 6 (as in the present examples).

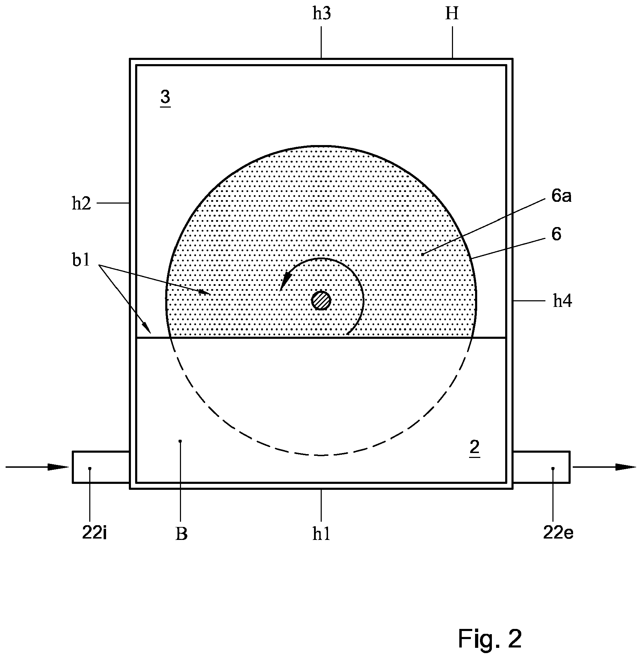

In the example, each processing unit U includes a first liquid conveyor 5 and a second liquid conveyor 6, for conveying first liquid A and a second liquid B from respective reservoirs 1, 2 towards the respective transfer space 3. Each conveyor 5, 6 can also be called a "surface enhancer". Particularly, the conveyors 5, 6 act to increase respective liquid-to gas and gas-to-liquid surface areas a1 b1 during operation. This can be achieved in various ways. In the present example, each first conveyor 5 is configured to carry a film of first liquid A, and to move the film along the gaseous phase (i.e. into the transfer space 3, through that space). A lower part of each first liquid conveyor 5 reaches into a first reservoir 1 to be wetted by the first liquid A. Each second conveyor 6 is configured to carry a film of second liquid B, and to move the film along the gaseous phase (i.e. into the transfer space 3). A lower part of each second liquid conveyor 5 reaches into a second reservoir 2 to be wetted by the liquid B (see Fig. 2). In the present example, all first liquid conveyors 5 have the same configuration, however, that is not essential to the invention. Also, preferably, but not essentially, the first and second conveyors 5, 6 have the same configuration.

More particularly, the present system is configured to generate several liquid films of first liquid, using first rotating disks 5 that are partly submerged in first liquid A that is contained in (preferably pumped through) the first reservoirs 1. Also, the system is configured to generate several liquid films of second liquid, using second rotating disks 6 that are partly submerged in the second liquid B held (preferably pumped through) in the second reservoirs 2. Each of the first and second disks 5, 6 acts as an afore-mentioned first and second conveyor.

Each first and second disk preferably has a rotating liquid conveying part, having a liquid sorbent surface; a liquid sorbent surface of a second disk 6 is indicated with reference sign 6a in Fig. 2. In a further embodiment, both lateral sides of each disk 5, 6 (the sides being faced away from each other) have a respective liquid sorbent surface.

The liquid sorbent surfaces of the disk 5, 6 can have different configurations, to receive liquid and, for example, to form a respective liquid film. For example, a rotating disk 5, 6 can be made of a single material or compound (for example a metal, alloy, or plastic), which material or compound as such provides the liquid sorbent disk surface(s). Alternatively, a rotating disk 5, 6 can include a main disk part (for example a substrate) and one or more layers or coatings that provide the liquid sorbent disk surface(s).

A liquid sorbent surfaces of a disk 5, 6 can be flat surfaces, or surfaces having a certain relief or surface roughness, for example a liquid dragging pattern or mesh.

In a further example, one or both disk surfaces of each first disk 5 and second disk 6 are provided with a liquid sorbent material, for example a material that absorbs, adsorbs, or absorbs and adsorbs, first and second liquid A, B, respectively. Liquid sorbent material can include a filter-type material, non-woven, a textile material, felt, paper or paper-like material, a porous or liquid pervious material, a liquid dragging material, a material configured to provide capillary action to hold the liquid, or a combination of these and/or other materials. In a further embodiment, a rotating disk 5, 6 can be made of such material.

Each rotating disk 5, 6 can have several orientations, for example a vertical orientation -as in the present examples- or a different orientation.

Besides, each rotating disk 5, 6 can have several shapes, for example a rotational symmetric configuration, for example cylindrical, conically, or otherwise. In the present embodiment, each disk 5, 6 has a circular contour. In that case, preferably, the top wall of the housing may have an afore-mentioned semi-circular cross-section (not shown), a concave side of the top wall being faced downwardly, the top wall and disks 5, 6 being concentric. As a result, a transfer space 3 is provided, having a semi-circular gap of constant width between the disks 5, 6 and the top wall, leading to improved efficiency.

The system includes a drive unit M, for example an electromotor or a different type of drive, coupled to each of the rotating disks 5, 6 to drive (rotate) the disks. In the example of Figures 1-4, the disks 5, 6 are all mounted to the same axis 7, driven by the drive unit M. Also, in this example, the first and second disks 5, 6 are all driven to rotate in the same direction. In an alternative embodiment (not shown), first disks 5 can be rotated in another (for example opposite) direction than a direction of rotation of the second disks 6, during operation.

In a further embodiment, the system can include one or more agitating or circulation devices (not shown) configured for agitating or circulating a content of the transfer space 3.

Besides, in a further embodiment, the system can include one or more agitating or circulation devices (not shown) configured for agitating or circulating a content of at least one of the reservoirs 1, 2.

Operation of the present system includes a method to transfer a volatile substance from the first liquid A to the second liquid B, particularly to purify the first liquid A, and to concentrate the substance into the second liquid B. Particularly, the substance to be removed, is dissolved in the first liquid A. The second liquid B has an affinity for the volatile substance that is larger than an affinity of the first liquid A for the substance.

In one example, the substance to be transferred from the first liquid A is ammonia. In that case, good results can be achieved when the second liquid B (provided from the respective source system 20) is an acid. In another non-limiting example, the substance to be transferred is a volatile fatty acid. In that case, the second liquid B (provided from the respective source system 20) is preferably a base.

During operation, the system increases a liquid-to-gas surface area al of the first liquid A, as well as a gas-to-liquid surface area b1 the second liquid B, to enhance mass transport (gaseous transfer) of the volatile substance from the first liquid A to the second liquid B via the air that is present in the respective transfer space 3. Afore-mentioned liquid films are generated, for example by dragging the films from a respective liquid baths A, B by respective film transporter surfaces (i.e. disk surfaces), being wetted in the baths. Particularly, in the present examples, the rotating disks 5, 6 increase the liquid-to-gas surface area a1 of the first liquid A and the gas-to-liquid surface area b1 of the second liquid B, by creating relatively thin films of the respective liquids A, B.

Operation preferably also involves pumping the first liquid A (provided from the source system 10) through the series of first reservoirs 1, towards the drain system 11. Also, during operation, the second liquid B is pumped from the second liquid source system 20 via the series of second reservoirs 2 to the respective drain system 21. In this example, the first liquid A is passed along the lower parts of the rotating first disks 5, and the second liquid B is passed along the lower parts of the rotating second disks 6. Optionally, first and/or second liquid is maintained stationary in the respective reservoirs 1, 2 during at least part of the process. Preferably, however, the first and second liquid A, B flow continuously through the sequences of reservoirs 1, 2.

Operation preferably also includes thermal conditioning of at least one of the liquids A, B, for example heating the liquid to a temperature higher than room temperature, or cooling the liquid. To this aim, a suitable temperature conditioning system, for example a heating and/or cooling system, can be provided. Such thermally conditioning can be achieved, for example, upstream with respect of the series of reservoirs 1, 2. In the depicted example, a heating unit 9 can heat first liquid A that is fed to the last reservoir 1, which can provide enhanced transfer of substance from that reservoir 1 into the respective transfer space 3. The heating unit can also be arranged to heat first liquid A elsewhere in the system, for example to heat liquid that is fed to one or more other reservoirs than the last reservoir 1, and/or to heat liquid present in one or more of the reservoirs 1.

During use, the liquid sorbent surfaces of the rotating disks 5, 6 are wetted by respective liquids A, B, leading to generation of respective liquid films, contacting the transfer space 3 extending above the liquid reservoirs 1, 2.

Thus, the present method can involve holding the liquids A, B separately from each other, in respective reservoirs 1, 2 of the processing units U, and providing (at least in each unit U) a shared, gas phase overhead, preferably the airtight transfer space (i.e. a transfer space that is sealed off from, i.e. not in fluid-communication with, an outside environment of the system). As follows from the drawings, in this example, the first and second liquid films are transported in parallel, along substantially vertical planes. A plurality of first films is generated from the first liquid A, and a plurality of second films is generated from the second liquid B. The volatile substance can be transferred from the plurality of first films to the plurality of second films via one or more air spaces 3 (overhead of the reservoirs 1, 2).The transfer is schematically indicated by arrows in Figures 3A, 3B. Also, in the present example, the liquid films, carried by the disks, may follow respective curved paths.

More particularly, the partial pressure of the volatile substance at each first film's surface (in the transfer region 3) can be higher than the partial pressure of the volatile substance at each seconds film's surface (also in the transfer region 3). Thus, during operation, volatile substance can evaporate from the first films (generated by the rotating first disks 5), transfer via the space 3 to the second films (generated by the rotating second disks 6), to be taken up into the second films, and transferred there-from into the second liquid B that is flowing through the second reservoirs 2. As a result, the first liquid A is purified from the substance. Preferably, the second liquid B, receiving the substance, forms a thermodynamically stable chemical species or derivate of the volatile substance, which is discharged to the drain system 21 (for example to be further processed). For example, the transferred substance can form a thermodynamically stable chemical species with a lowered partial vapour pressure in the destination liquid (B).

In the present examples, the first and second films move in the same directions. In an alternative embodiments, the films move in opposite directions. Also, according to a further elaboration, the method can include transporting the first and second liquid A, B at different flow rates. For example, the flow rate of the second liquid B can be lower than the flow rate of the first liquid A, to generate a second liquid B having a relatively high concentration of transferred substance. Also, the method preferably includes transporting the first and second liquid A, B in counter-current flow, to enhance transfer of the volatile substance. Moreover, liquid levels of first and second liquid A, B in the respective first and second reservoirs 1, 2 may be substantially the same during operation (as in Fig. 3A, 3B), or the levels can be different from each other. Besides, a liquid level in each of the reservoirs 1, 2 can be constant during operation, or it may vary.

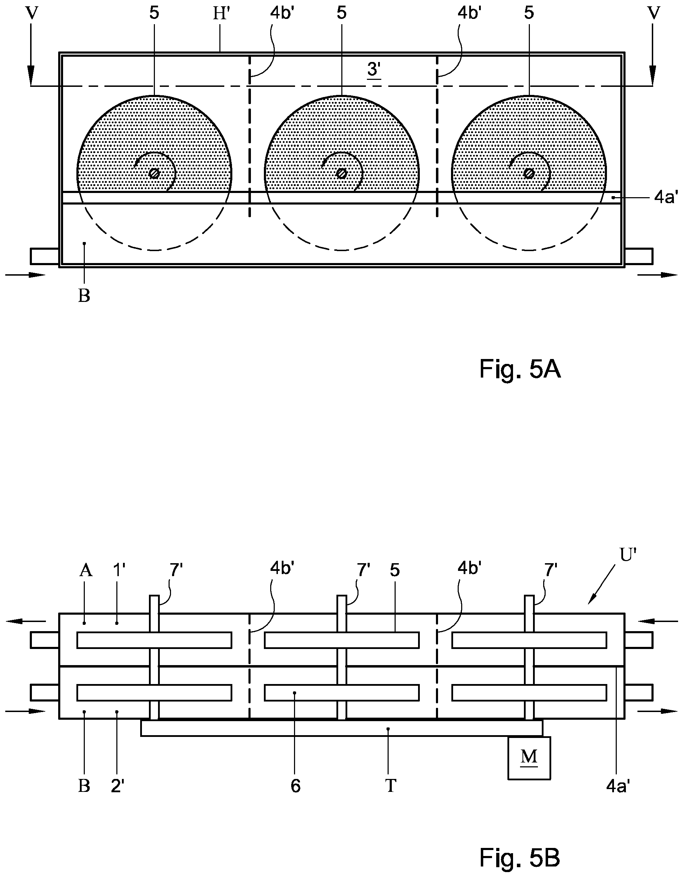

Figures 5A, 5B show an alternative configuration, including an elongated processing unit U'. In this case, a first reservoir 1' is provided for receiving first liquid A, a second reservoir 2' is provided for receiving second liquid B. A first partition wall 4a' is provided between the reservoirs 1', 2' the wall 4a' having an upper edge that is spaced-apart from the top wall of the housing H'. An upper edge of the partition wall 4a' is located above liquid levels in both reservoirs 1', 2' during operation. A common airtight transfer space 3' is located overhead. In this case, a plurality of first disks is provided to be wetted by first liquid, present in the first reservoir 1'. A plurality of second disks 5 is provided to be wetted by second liquid, present in the second reservoir 2'. As an example, first and second disks are grouped in pairs (one first disk and one second disk), mounted in parallel, on respective driven axes 7' that are coupled to a drive unit M via a suitable transmission system T. Operation of the system shown in Figures 5A, 5B is similar to the operation of the system shown in Figures 1-4. In yet a further example, the transfer space 3' can be divided in a sequence of transfer spaces, for example by gas tight wall members extending between subsequent pairs of conveyors 5, 6; such wall members are schematically indicated by dashed lines 4b' in Fig. 5A-5B; their lower edges are preferably located below liquid levels in both reservoirs 1', 2' during operation. In the example, these partition members 4b' are configured to allow liquid to pass between subsequent sections of the reservoirs 1', 2', for example via a respective liquid passage provided in or below the partition members 4b'.

Preferably, as follows from the above, a method according to the invention includes evaporation of the volatile substance(s) from a liquid to gas surface of the first liquid A, into a gas phase (present in, or provided by the transfer space 3), the gas phase being in contact with a gas-to-liquid surface of the second liquid B. This allows an efficient uptake of the evaporated substance(s) into the second liquid B.

The present method particularly does not require mechanical vapour recompression to concentrate volatile substances (for example from vapour streams). Therefore, the present method can be carried out without requiring a lot of mechanical and/or thermal energy. The present invention can provide a relatively low-tech, cheap solution for purification and concentration of one or more volatile substances, for example from one liquid stream to another liquid stream.

As follows from the above, embodiments of the invention allow for two separated liquids A, B to share a common gas-phase, and preferably a sequence of common gas phases. For example, the first liquid A may contain one or more volatile substances that should be removed, while the second liquid B has an enhanced affinity for said volatile substance(s). Besides, embodiments of the present invention can provide a relatively pure, concentrated solution (the second liquid) containing the volatile substance(s) due to the fact that the substance travels through an air phase. Thus, no evaporation of the first liquid as such is required, to obtain a purified first liquid, and a concentrated second liquid

In the foregoing specification, the invention has been described with reference to specific examples of embodiments of the invention. It will, however, be evident that various modifications and changes may be made therein without departing from the broader spirit and scope of the invention as set forth in the appended claims.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

For example, a first liquid A can be called a called a "source liquid". A first liquid B can be called a called a "destination liquid".

In a non-limiting embodiment, during operation, a speed of each rotating disk 5, 6 can be lower than 20 rpm (revolutions per minute), for example in the range of 0.5 to 10 rpm.

The liquid conveyors can have various dimensions. In a non-limiting embodiment, a diameter of each disk 5, 6 (and of a respective liquid sorbent surface) can be larger than 10 cm, for example larger than 0.5 m, and preferably 1 m or larger.

Each liquid reservoir 1, 2 can be configured to hold various amounts of liquid. In a non-limiting embodiment, each reservoir 1, 2 can be configured to contain at least 10 liters of liquid, for example 30 liters or more.

Also, for example, each reservoir 1, 2 can be provided with at least two liquid ports, for example one or more input ports 12i, 22i and one or more output ports 12e, 22e. In the example of Fig. 2, the input and output ports are lateral ports, connected to opposite side walls of the reservoirs 1, 2. In an alternative embodiment, at least one bottom liquid port can be provided, being connected to a bottom wall of the reservoir 1, 2 (for example near a side wall). In that way, improved drainage of the reservoir 1, 2, and/or removal of solid matter, for example sediment, can be achieved. In yet a further advantageous embodiment, a reservoir 1, 2 can be provided with at least one lateral liquid port (for example input or output port) and at least one bottom liquid port (for example input or output port).

Besides, a sequence of gas phases (transfer spaces 3), can be provided, each gas phase being located overhead of a respective first and second reservoir 1, 2 of a processing unit U. In another embodiment, a first gas phase (transfer space) can be located overhead of a first reservoir 1, and a second gas phase (transfer space) can be located overhead of a second reservoir 2, wherein the first and second gas phases are separated by a gas tight wall. In that case, the first and second gas phase can be in fluid communication with each other, for example utilizing a duct system that bypasses the gas tight wall (the duct system preferably having a transfer medium pumping device).

Besides, in a further embodiment, a processing unit U can include the same number of first liquid conveyors (5) as second liquid conveyors (6) (such as in Figures 1-4). Alternatively, a processing unit U can include more, or less, first liquid conveyors (5) than the number of second liquid conveyors.

Also, in a further embodiment, a heating system is provided for heating one or more of the liquid conveyors (5, 6). For example, according to a further embodiment, at least part of such a heating system can be integrated in at least part of the shaft (axis) 7 that is provided with the conveyors, and/or in one or more conveyors. The liquid conveyor heating system can be configured in various ways, for example by including one or more electric heating devices. Also, for example, the heating system can be a configured to transfer a heated fluid (for example hot water) to one or more liquid conveyors, for example through the respective shaft 7 (the shaft then functioning as a fluid duct for conveying the heating fluid to the rotating liquid conveyors). It is expected that good results can be achieved in case the heating system is configured for heating at least one or more of the first liquid conveyors during operation.

Also, two or more separate first liquids can be used, for example two different streams of waste water (from different sources), wherein a method and system according to the invention are applied to transfer a volatile substance from each of these liquids to the same second liquid.

Also, the system can be provided with a control means for regulating a pH (potential for hydrogen ion concentration) value of a first and/or second liquid, for example by supplying a pH changing substance to the liquid. Such control means can be provided with a detecting means to detect said pH value.

Also, the system can be provided with a control means for regulating the level of liquid in one or more of the reservoirs 1, 2. Such control means can be provided with a detecting means to detect said fluid level.

In a further embodiment, the system can include a control means for regulating a liquid parameter, for example a liquid temperature and/or a pH value of the liquid. In a further embodiment, such a control means can be configured to adjust the respective liquid parameter in dependence of another process parameter, for example a liquid level in a reservoir, a flow rate of a liquid and/or a speed of a liquid conveyor (for example a disc rotation speed).

Similarly, in a further embodiment, the system can include a control means for adjusting a process parameter, for example a liquid level in a reservoir, a flow rate of a liquid and/or a speed of a liquid conveyor (for example a disc rotation speed). In a further embodiment, such a control means can be configured to adjust the respective process parameter in dependence a liquid parameter, for example a liquid temperature and/or a pH of the liquid value.

Further, during operation, a shaft (axis) 7 of a rotating liquid conveyor can be located below an upper level of first liquid held in a respective first reservoir 1, and/or below an upper level of second liquid held second liquid held in a respective second reservoir 2. For example, liquid can be used to shield the shaft from the content of a respective transfer space 3. This is beneficial in case the content of the respective transfer space 3 is harmful to the shaft (for example due to corroding action). Also, during operation, the shaft (axis) 7 of a rotating liquid conveyor can be located below an upper level of liquid held in a respective first and/or second reservoir 1, 2, and/ or it can intersect that level.

## Claims

1. A method to transfer a volatile substance from a first liquid (A) to a second liquid (B), comprising:
- holding the liquids (A, B) separately from each other, and providing a shared, airtight gas phase;
- generating at least one liquid film of the first liquid (A) using at least one first liquid conveyor (5), the first conveyor (5) conveying the film of first liquid along the gas phase (3); and
- generating at least one liquid film of the second liquid (B) using at least one second liquid conveyor (6), the second conveyor (6) conveying the film of second liquid along said gas phase (3),
such, that the volatile substance is transferred via the gas phase from the first liquid (A) to the second liquid (B),
wherein the second liquid (B) has an affinity for the volatile substance that is larger than an affinity of the first liquid (A) for the substance.

2. The method according to claim 1, wherein at least one of the liquid conveyors is a rotating liquid conveyor.

3. The method according to claim 2, wherein each liquid conveyor is a rotating liquid conveyor.

4. The method according to any of the preceding claims, where at least one liquid film is generated using at least one rotating disk that is partly submerged in the liquid (A, B).

5. The method according to any of the preceding claims, including: feeding the first liquid (A) through a sequence of first reservoirs, feeding the second liquid through a sequence of second reservoirs, and providing a sequence of gas phases , each gas phase being in fluid communication with a respective first and second reservoir of the sequences of reservoirs.

6. The method according to any of the preceding claims, wherein the volatile substance is a volatile gaseous substance that is dissolved in the first liquid (A).

7. The method according to any of the preceding claims, including the use of a system, wherein the system includes:
- at least one first reservoir (1) for receiving the first liquid (A);
- at least one second reservoir (2) for receiving the second liquid (B);
- at least one airtight transfer space (3) overhead of the at least one first and at least one second reservoir (1, 2);
- the at least first liquid conveyor (5) for generating the film of first liquid (A) from liquid received in said first reservoir (1), and for conveying that film along said airtight transfer space (3); and
- the at least second liquid conveyor (6) for generating the film of second liquid (B) from liquid received in said second reservoir (2), and for conveying that film along said airtight transfer space (3).

8. Method according to claim 7, wherein the system has a housing configured to provide the airtight transfer space (3) overhead of the at least one first and at least one second reservoir.

9. Method according to claim 7 or 8 wherein the system comprises a sequence of pairs of adjacent reservoirs (1, 2) and respective first and second liquid conveyors (5, 6), wherein the reservoirs (1) for the first liquid (A) are connected in series, wherein the reservoirs (2) for the second liquid (B) are connected in series,
wherein each first liquid conveyor (5) has a rotating liquid conveying part, having a liquid sorbent surface,
wherein each second liquid conveyor (6) has a rotating liquid conveying part, having a liquid sorbent surface.

10. Method according to any of claims 7-9, wherein the first and second liquid conveyors are rotating disks, wherein a diameter of each disk (5, 6) is larger than 10 cm, for example larger than 0.5 m.

11. Method according to claim 10, wherein a diameter of each disk is (5, 6) is 1 m or larger.

12. Method according to any of claim 7-11 wherein each liquid conveyor (5, 6) includes a rotating part having a rotational symmetric configuration, for example cylindrical shaped.

13. Method according to any of claims 7-12, wherein at least one of the liquid conveyors, for example each liquid conveyor (5, 6), is provided with at least one liquid sorbent material for generating the film, the material being selected from one or more of the following materials:
- a material that absorbs liquid;
- a material that adsorbs liquid;
- a filter-type material;
- a textile material;
- felt;
- a non woven material;
- paper or paper-like material;
- a porous or liquid pervious material; and/or
- a liquid dragging material;
- a material configured to provide capillary action to hold the liquid.

## Patentansprüche

1. Verfahren zur Übertragung einer flüchtigen Substanz von einer ersten Flüssigkeit (A) zu einer zweiten Flüssigkeit (B), umfassend:
- das getrennt Halten der Flüssigkeiten (A, B) voneinander und das Bereitstellen einer gemeinsamen luftdichten Gasphase;
- das Erzeugen von mindestens einem Flüssigfilm von der ersten Flüssigkeit (A) unter Verwendung von mindestens einem ersten Flüssigkeitsförderer (5), welcher erste Förderer (5) den Film der ersten Flüssigkeit entlang der Gasphase (3) befördert; und
- das Erzeugen von mindestens einem Flüssigfilm von der zweiten Flüssigkeit (B) unter Verwendung von mindestens einem zweiten Flüssigkeitsförderer (6), welcher zweite Förderer (6) den Film der zweiten Flüssigkeit entlang der Gasphase (3) befördert,
derart, dass die flüchtige Substanz über die Gasphase von der ersten Flüssigkeit (A) zu der zweiten Flüssigkeit (B) übertragen wird,
wobei die zweite Flüssigkeit (B) eine Affinität für die flüchtige Substanz hat, die größer ist als eine Affinität der ersten Flüssigkeit (A) für die Substanz.

2. Verfahren nach Anspruch 1, wobei der mindestens eine der Flüssigkeitsförderer ein drehender Flüssigkeitsförderer ist.

3. Verfahren nach Anspruch 2, wobei jeder Flüssigkeitsförderer ein drehender Flüssigkeitsförderer ist.

4. Verfahren nach einem der vorhergehenden Ansprüche, wobei mindestens ein Flüssigfilm unter Verwendung von mindestens einer drehenden Scheibe, die teilweise in die Flüssigkeit (A, B) eingetaucht ist, erzeugt wird.

5. Verfahren nach einem der vorhergehenden Ansprüche, einschließlich:
das Zuführen der ersten Flüssigkeit (A) durch eine Sequenz von ersten Reservoirs, das Zuführen der zweiten Flüssigkeit durch eine Sequenz von zweiten Reservoirs und das Bereitstellen einer Sequenz von Gasphasen, von denen jede in Fluidkommunikation mit jeweils einem ersten und zweiten Reservoir der Sequenz von Reservoirs ist.

6. Verfahren nach einem der vorhergehenden Ansprüche, wobei die flüchtige Substanz eine flüchtige gasförmige Substanz ist, die in der ersten Flüssigkeit (A) aufgelöst ist.

7. Verfahren nach einem der vorhergehenden Ansprüche, einschließlich der Verwendung eines Systems, wobei das System Folgendes umfasst:
- mindestens ein erstes Reservoir (1) zum Empfangen der ersten Flüssigkeit (A);
- mindestens ein zweites Reservoir (2) zum Empfangen der zweiten Flüssigkeit (B);
- mindestens einen luftdichten Übertragungsraum (3) über dem mindestens einen ersten und mindestens einen zweiten Reservoir (1, 2);
- den mindestens ersten Flüssigkeitsförderer (5) zum Erzeugen des ersten Flüssigfilms (A) von Flüssigkeit, empfangen in dem ersten Reservoir (1), und zum Befördern dieses Films entlang des luftdichten Übertragungsraums (3); und
- den mindestens zweiten Flüssigkeitsförderer (6) zum Erzeugen des zweiten Flüssigfilms (B) von Flüssigkeit, empfangen in dem zweiten Reservoir (2), und zum Befördern dieses Films entlang des luftdichten Übertragungsraums (3).

8. Verfahren nach Anspruch 7, wobei das System ein Gehäuse hat, das konfiguriert ist, um den luftdichten Übertragungsraum (3) über dem mindestens einen ersten und mindestens einen zweiten Reservoir bereitzustellen.

9. Verfahren nach Anspruch 7 oder 8, wobei das System eine Sequenz von Paaren benachbarter Reservoirs (1, 2) und jeweils ersten und zweiten Flüssigkeitsförderern (5, 6) umfasst, wobei die Reservoirs (1) für die erste Flüssigkeit (A) in Reihe verbunden sind, wobei die Reservoirs (2) für die zweite Flüssigkeit (B) in Reihe verbunden sind,
wobei jeder erste Flüssigkeitsförderer (5) ein drehendes, flüssigkeitsbeförderndes Teil mit einer Flüssigkeitssorptionsfläche hat, und
wobei jeder zweite Flüssigkeitsförderer (6) ein drehendes, flüssigkeitsbeförderndes Teil mit einer Flüssigkeitssorptionsfläche hat.

10. Verfahren nach einem der Ansprüche 7-9, wobei die ersten und zweiten Flüssigkeitsförderer drehende Scheiben sind, wobei ein Durchmesser von jeder Scheibe (5, 6) größer als 10 cm, zum Beispiel größer als 0,5 m, ist.

11. Verfahren nach Anspruch 10, wobei ein Durchmesser von jeder Scheibe (5, 6) 1 m oder größer ist.

12. Verfahren nach einem der Ansprüche 7-11, wobei jeder Flüssigkeitsförderer (5, 6) ein drehendes Teil mit einer rotationssymmetrischen Konfiguration hat, zum Beispiel zylinderförmig.

13. Verfahren nach einem der Ansprüche 7-12, wobei mindestens einer der Flüssigkeitsförderer, zum Beispiel jeder Flüssigkeitsförderer (5, 6) mit mindestens einem Flüssigkeitssorptionsmaterial zum Erzeugen des Films versehen ist, welches Material ausgewählt ist aus einem oder mehreren der folgenden Materialien:
- einem Material, das Flüssigkeit absorbiert;
- einem Material, das Flüssigkeit adsorbiert;
- einem Material vom Filtertyp;
- einem Textilmaterial;
- Filz;
- einem nicht gewebten Material;
- einem Papier oder papierähnlichen Material;
- einem porösen oder flüssigkeitsdurchlässigen Material; und/oder
- einem flüssigkeitsziehenden Material;
- einem Material, konfiguriert zum Bereitstellen von Kapillarwirkung, um die Flüssigkeit zu halten.

## Revendications

1. Procédé de transport d'une substance volatile d'un premier liquide (A) à un second liquide (B), comprenant les étapes suivantes :
- conserver les liquides (A, B) séparés l'un de l'autre et fournir une phase partagée, étanche au gaz ;
- générer au moins un film liquide du premier liquide (A) en utilisant au moins un premier convoyeur de liquide (5), le premier convoyeur (5) acheminant le film du premier liquide le long de la phase gazeuse (3) ; et
- générer au moins un film liquide du second liquide (B) en utilisant au moins un second convoyeur de liquide (6) le second convoyeur (6) acheminant le film du second liquide le long de ladite phase gazeuse (3),
de sorte que la substance volatile soit transportée, par le biais de la phase gazeuse, du premier liquide (A) au second liquide (B),
dans lequel le second liquide (B) présente une affinité pour la substance volatile qui est supérieure à une affinité du premier liquide (A) pour la substance.

2. Procédé selon la revendication 1, dans lequel au moins un des convoyeurs de liquide est un convoyeur de liquide rotatif.

3. Procédé selon la revendication 2, dans lequel chaque convoyeur de liquide est un convoyeur de liquide rotatif.

4. Procédé selon l'une quelconque des revendications, où au moins un film liquide est généré en utilisant au moins un disque rotatif qui est immergé en partie dans le liquide (A, B) .

5. Procédé selon l'une quelconque des revendications précédentes, comprenant les étapes suivantes :
alimenter le premier liquide (A) par le biais d'une séquence de premiers réservoirs, alimenter le second liquide par le biais d'une séquence de seconds réservoirs, et fournir une séquence de phases gazeuses, chaque phase gazeuse étant en communication de fluide avec un premier et un second réservoir respectif des séquences de réservoirs.

6. Procédé selon l'une quelconque des revendications précédentes, dans lequel la substance volatile est une substance volatile gazeuse qui est dissoute dans le premier liquide (A).

7. Procédé selon l'une quelconque des revendications précédentes, comprenant l'utilisation d'un système, dans lequel le système comprend :
- au moins un premier réservoir (1) pour recevoir le premier liquide (A) ;
- au moins un second réservoir (2) pour recevoir le second liquide (B) ;
- au moins un espace de transfert étanche à l'air (3) au-dessus du au moins un premier et au moins un second réservoir (1, 2) ;
- le au moins un premier convoyeur de liquide (5) pour générer le film du premier liquide (A) à partir du liquide reçu dans ledit premier réservoir (1), et pour transporter ce film le long dudit espace de transfert étanche à l'air (3) ; et
- le au moins un second convoyeur de liquide (6) pour générer le film du second liquide (B) à partir du liquide reçu dans ledit second réservoir (2), et pour transporter ce film le long dudit espace de transfert étanche à l'air (3).

8. Procédé selon la revendication 7, dans lequel le système possède un logement configuré pour fournir l'espace de transfert étanche à l'air (3) au-dessus du au moins un premier et du au moins un second réservoir.

9. Procédé selon la revendication 7 ou 8, dans lequel le système comprend une séquence de paires de réservoirs adjacents (1, 2) et des premier et second convoyeurs de liquide respectifs (5, 6), dans lequel les réservoirs (1) pour le premier liquide (A) sont reliés en série, dans lequel les réservoirs (2) pour le second liquide (B) sont reliés en série,
dans lequel chaque premier convoyeur de liquide (5) a une partie de transport de liquide rotative, ayant une surface absorbante de liquide,
dans lequel chaque second convoyeur de liquide (6) a une partie de transport de liquide rotative, ayant une surface absorbante de liquide.

10. Procédé selon l'une quelconque des revendications 7 à 9, dans lequel les premier et second convoyeurs de liquide sont des disques rotatifs, dans lequel un diamètre de chaque disque (5, 6) est supérieur à 10 cm, supérieur par exemple à 0,5 m.

11. Procédé selon la revendication 10, dans lequel un diamètre de chaque disque (5, 6) est égal à 1 m ou plus.

12. Procédé selon l'une quelconque des revendications 7 à 11, dans lequel chaque convoyeur de liquide (5, 6) comprend une partie rotative ayant une configuration de rotation symétrique, une forme cylindrique par exemple.

13. Procédé selon l'une quelconque des revendications 7 à 12, dans lequel au moins un des convoyeurs de liquides, par exemple chaque convoyeur de liquide (5, 6) est doté d'au moins une matière absorbante de liquide pour générer le film, la matière étant sélectionnée parmi une ou plusieurs des matières suivantes :
- une matière qui absorbe le liquide ;
- une matière qui adsorbe le liquide ;
- une matière de type filtrant ;
- une matière textile ;
- un feutre ;
- une matière non tissée ;
- du papier ou une matière similaire à du papier ;
- une matière perméable au liquide ou poreuse ; et/ou
- une matière attirant le liquide ;
- une matière configurée pour fournir une action capillaire afin de retenir le liquide.
